# EUROPEAN PATENT APPLICATION

(11) **EP 4 507 397 A1**
(43) Date of publication of application: **12.02.2025**
(21) Application number: 23838934.0
(22) Date of filing: 11.07.2023
(51) Int. Cl.: H04W 52/02

(54) **METHOD AND SYSTEM FOR CONTROLLING POWER CONSUMPTION OF DEVICE, AND ELECTRONIC DEVICE**

(30) Priority: 14.07.2022 CN 202210825921
(71) Applicant: Huawei Technologies Co., Ltd., Shenzhen, Guangdong 518129 (CN)
(72) Inventor: LI, Bing, Shenzhen, Guangdong 518129 (CN); ZHANG, Wei, Shenzhen, Guangdong 518129 (CN); FANG, Shuailei, Shenzhen, Guangdong 518129 (CN); XU, Bei, Shenzhen, Guangdong 518129 (CN); DUAN, Qian, Shenzhen, Guangdong 518129 (CN)
(74) Representative: Pfenning, Meinig & Partner mbB
(86) International application number: PCT/CN2023/106755
(87) International publication number: WO 2024/012443

(57) **Abstract**

This application discloses a method for controlling device power consumption, a system, and an electronic device, and relates to the field of electronic technologies. According to the method for controlling device power consumption provided in this application, when an electronic device like a watch accesses a network through a network proxy provided by another electronic device, before the watch enters a sleep phase, the watch sends a notification to the electronic device providing the network proxy, to indicate the electronic device providing the network proxy not to send a network status change notification to the watch after a network status changes. **In** this way, the watch is not woken up in the sleep phase. This reduces power consumption of the watch in the sleep phase, and improves a battery life of the electronic device like the watch.

## Description

This application claims priority to Chinese Patent Application No. 202210825921.6, filed with the China National Intellectual Property Administration on July 14, 2022 and entitled "METHOD FOR CONTROLLING DEVICE POWER CONSUMPTION, SYSTEM, AND ELECTRONIC DEVICE", which is incorporated herein by reference in its entirety.

### TECHNICAL FIELD

This application relates to the field of electronic technologies, and in particular, to a method for controlling device power consumption, a system, and an electronic device.

### BACKGROUND

With development of electronic technologies, functions of an electronic device are continuously enhanced, and a consumer uses the electronic device increasingly frequently in daily life. For an electronic device like a wearable electronic device, because a use habit of the consumer, a product form, and a product usage are different from those for an electronic device like a mobile phone or a tablet, the electronic device like the wearable electronic device needs to have a longer battery life.

To improve the battery life of the electronic device like the wearable electronic device, in a feasible method, when it is determined that the electronic device like the wearable electronic device is in a specific state like a non-worn state, a program running on the electronic device is terminated and closed, to reduce power consumption of the electronic device and improve the battery life of the electronic device.

According to the method mentioned above, only a part of power consumption of the electronic device can be reduced, and a benefit of obtaining the power consumption is limited. However, the power consumption of the electronic device is not only generated by an application running on the electronic device. In more cases, the power consumption of the electronic device is usually generated due to some underlying mechanisms in an operating system on the electronic device. For example, in many cases, after a network status of another electronic device that provides a network access capability for the electronic device like the wearable electronic device changes, the another electronic device updates a changed network status to the electronic device that uses the network access capability, to trigger the electronic device that uses the network access capability to perform some operations. As a result, the battery life of the electronic device decreases.

### SUMMARY

This application discloses a method for controlling device power consumption, a system, and an electronic device, and relates to the field of electronic technologies. According to the method for controlling device power consumption provided in this application, when an electronic device like a watch accesses a network through a network proxy provided by another electronic device, before the watch enters a sleep phase, the watch sends a notification to the electronic device providing the network proxy, to indicate the electronic device providing the network proxy not to send a network status change notification to the watch after a network status changes. In this way, the watch is not woken up in the sleep phase. This reduces power consumption of the watch in the sleep phase, and improves a battery life of the electronic device like the watch.

According to a first aspect, this application provides a system. The system includes a first electronic device and a second electronic device. The first electronic device is connected to the second electronic device. The second electronic device accesses a network via the first electronic device. The second electronic device is configured to send a first notification to the first electronic device before switching from a non-sleep phase to a sleep phase, where the first notification indicates that the second electronic device is prohibited from sending a network status change notification. The first electronic device is configured to: after receiving the first notification, skip sending the network status change notification to the second electronic device after determining that a network status of the first electronic device changes, where the network status change notification includes the network status of the first electronic device. The second electronic device is configured to send a second notification to the first electronic device after switching from the sleep phase to the non-sleep phase, where the second notification indicates that the second electronic device is allowed to send the network status change notification. The first electronic device is configured to send the network status change notification to the second electronic device after receiving the second notification.

In the foregoing embodiment, because the second electronic device can send the first notification to the first electronic device before entering the sleep phase, to indicate the first electronic device not to send the network status change notification, the second electronic device may be prevented from being woken up in the sleep phase. After the second electronic device enters the non-sleep phase, the first electronic device sends the second notification to the second electronic device, to indicate that the second electronic device can send the network status change notification, so that the first electronic device may obtain a correct network status, and normal use of the second electronic device by a user is not affected.

With reference to some embodiments of the first aspect, in some embodiments, the second electronic device sends data for network access to the second electronic device through a first data channel. The second electronic device is further configured to disable the first data channel before switching from the non-sleep phase to the sleep phase.

In the foregoing embodiment, the second electronic device may further release some resources used for a network proxy, to reduce memory and CPU occupation, and further reduce power consumption of the second electronic device in the sleep phase.

With reference to some embodiments of the first aspect, in some embodiments, the first electronic device receives and forwards, through a second data channel, the data for network access sent by the second electronic device. The first electronic device is further configured to disable the second data channel after receiving the first notification.

In the foregoing embodiment, the first electronic device may further release some resources used for a network proxy, to reduce memory and CPU occupation, and further reduce power consumption of the first electronic device.

With reference to some embodiments of the first aspect, in some embodiments, the second electronic device is further configured to configure a network status of the second electronic device as no network or network unavailable before switching from the non-sleep phase to the sleep phase.

In the foregoing embodiment, the second electronic device may further configure, in the sleep phase, the current network status as no network. When no network is available, an application on the second electronic device may perform fewer operations, to reduce the power consumption of the second electronic device.

With reference to some embodiments of the first aspect, in some embodiments, the second electronic device is further configured to: obtain a first parameter, and determine, based on the first parameter, that a state of the second electronic device is a first state. The second electronic device is further configured to determine, based on the first state, to switch from the sleep phase to the non-sleep phase or switch from the non-sleep phase to the sleep phase.

In the foregoing embodiment, the second electronic device may determine, based on a plurality of parameters, whether to enter the sleep phase or the non-sleep phase. This conforms to a use habit of the user.

With reference to some embodiments of the first aspect, in some embodiments, when the second electronic device determines, based on the first state, to switch from the non-sleep phase to the sleep phase, the first state is a sleep state or a non-worn state.

In the foregoing embodiment, when determining that the user sleeps or the user does not wear the electronic device for a long time, the second electronic device may determine to enter the sleep phase. In the sleep phase, power consumption of the second electronic device is low. Therefore, entering the sleep phase in time can reduce the power consumption of the second electronic device and improve a battery life of the second electronic device.

With reference to some embodiments of the first aspect, in some embodiments, the second electronic device is further configured to send, in the non-sleep phase, a network detection request to the first electronic device. The first electronic device is further configured to determine a network detection result based on the network status of the first electronic device. The first electronic device is further configured to send the network detection result to the second electronic device.

In the foregoing embodiment, in some cases, after the second electronic device initiates network detection, the first electronic device may directly determine, based on the network status of the first electronic device and/or a historical network detection result of the first electronic device, the network detection result of the network detection initiated by the second electronic device, and return the network detection result to the second electronic device.

With reference to some embodiments of the first aspect, in some embodiments, in some cases, the second electronic device may not initiate network detection.

In the foregoing embodiment, because the first electronic device also performs network detection, the second electronic device does not need to initiate network detection. For example, if both the first electronic device and the second electronic device are Huawei devices, servers pointed to by network detection of an operating system of the first electronic device and network detection of an operating system of the second electronic device are servers with a same domain name. In addition, in most cases, an application server is usually not disconnected from a network. Therefore, after the second electronic device is connected to the internet, it may be considered that the second electronic device can be connected to the server.

According to a second aspect, this application provides a method for controlling device power consumption, applied to a second electronic device. A first electronic device is connected to the second electronic device. The second electronic device accesses a network via the first electronic device. The method includes: The second electronic device updates, after receiving, in a non-sleep phase, a network status change notification sent by the first electronic device, a network status based on the network status change notification, where the network status change notification includes a network status of the first electronic device; the second electronic device sends, before determining to enter a sleep phase from the non-sleep phase, a first notification to the first electronic device, where the first notification indicates that the first electronic device is prohibited from sending a network status change notification; and the second electronic device sends, after determining to enter the non-sleep phase from the sleep phase, a second notification to the first electronic device, where the second notification indicates that the first electronic device is allowed to send a network status change notification.

In the foregoing embodiment, because the second electronic device can send the first notification to the first electronic device before entering the sleep phase, to indicate the first electronic device not to send the network status change notification, the second electronic device may be prevented from being woken up in the sleep phase. After the second electronic device enters the non-sleep phase, the first electronic device sends the second notification to the second electronic device, to indicate that the second electronic device can send the network status change notification, so that the first electronic device may obtain a correct network status, and normal use of the second electronic device by a user is not affected.

With reference to some embodiments of the second aspect, in some embodiments, the second electronic device sends data for network access to the second electronic device through a first data channel. The method further includes: The second electronic device disables the first data channel before the second electronic device determines to enter the sleep phase from the non-sleep phase.

In the foregoing embodiment, the second electronic device may further release some resources used for a network proxy, to reduce memory and CPU occupation, and further reduce power consumption of the second electronic device.

With reference to some embodiments of the second aspect, in some embodiments, that the second electronic device disables the first data channel specifically includes: The second electronic device configures the network status as no network or network unavailable.

In the foregoing embodiment, the second electronic device may further configure, in the sleep phase, the current network status as no network. When no network is available, an application on the second electronic device may perform fewer operations, to reduce the power consumption of the second electronic device.

According to a third aspect, this application provides a method for controlling device power consumption, applied to a second electronic device. A first electronic device is connected to the second electronic device. The second electronic device accesses a network via the first electronic device. The method includes: The second electronic device stores, after receiving, in a sleep phase, a network status change notification sent by the first electronic device, the network status change notification; the second electronic device updates, after entering a non-sleep phase from the sleep phase, a network status based on the network status change notification received in the sleep phase; and the second electronic device updates, after receiving, in the non-sleep phase, a network status change notification sent by the first electronic device, the network status based on the network status change notification received in the non-sleep phase.

In the foregoing embodiment, because the second electronic device does not respond, after entering the sleep phase, to the network status change notification sent by the first electronic device, power consumption of the second electronic device in the sleep phase can be reduced. After entering the non-sleep phase, the second electronic device may determine the current network status based on the stored network status change notification, and normal use of the second electronic device is not affected.

With reference to some embodiments of the third aspect, in some embodiments, the second electronic device sends data for network access to the second electronic device through a first data channel. The method further includes: The second electronic device disables the first data channel before the second electronic device determines to enter the sleep phase from the non-sleep phase.

In the foregoing embodiment, the second electronic device may further release some resources used for a network proxy, to reduce memory and CPU occupation, and further reduce power consumption of the second electronic device.

With reference to some embodiments of the third aspect, in some embodiments, that the second electronic device disables the first data channel specifically includes: The second electronic device configures the network status as no network or network unavailable.

In the foregoing embodiment, the second electronic device may further configure, in the sleep phase, the current network status as no network. When no network is available, an application on the second electronic device may perform fewer operations, to reduce the power consumption of the second electronic device.

According to a fourth aspect, this application provides a method for controlling device power consumption, applied to a second electronic device. A first electronic device is connected to the second electronic device. The second electronic device accesses a network via the first electronic device. The method includes: The second electronic device stores, after receiving, in a light sleep phase, a network status change notification sent by the first electronic device, the network status change notification; the second electronic device updates, after entering a non-sleep phase from the light sleep phase, a network status based on the network status change notification received in the light sleep phase; the second electronic device sends, before determining to enter a deep sleep phase from the non-sleep phase or the light sleep phase, a first notification to the first electronic device, where the first notification indicates the first electronic device not to send a network status change notification, or the first notification is used to determine that the first electronic device is in the deep sleep phase; and the second electronic device sends, after entering the non-sleep phase from the deep sleep phase, a second notification to the first electronic device, where the second notification indicates that the first electronic device is allowed to send a network status change notification, or the second notification is used to determine that the second electronic device is in the non-sleep phase.

In the foregoing embodiment, when the second electronic device is in the light sleep phase, the second electronic device does not respond to the network status change notification sent by the first electronic device. After entering the non-sleep phase from the light sleep phase, the second electronic device may determine the current network status based on the stored network status change notification, and normal use of the second electronic device is not affected. Before accessing the deep sleep phase, the second electronic device sends the first notification to the first electronic device, to indicate the first electronic device not to send the network status change notification, so that the second electronic device can be prevented from being woken up in the sleep phase. After the second electronic device enters the non-sleep phase, the first electronic device sends the second notification to the second electronic device, to indicate that the second electronic device can send the network status change notification, so that the first electronic device may obtain a correct network status, and normal use of the second electronic device by a user is not affected.

With reference to some embodiments of the fourth aspect, in some embodiments, the second electronic device sends data for network access to the second electronic device through a first data channel. The method further includes: The second electronic device disables the first data channel before the second electronic device determines to enter the sleep phase from the non-sleep phase.

In the foregoing embodiment, the second electronic device may further release some resources used for a network proxy, to reduce memory and CPU occupation, and further reduce power consumption of the first electronic device.

With reference to some embodiments of the fourth aspect, in some embodiments, the second electronic device configures the network status as no network or network unavailable.

In the foregoing embodiment, the second electronic device may further configure, in the sleep phase, the current network status as no network. When no network is available, an application on the second electronic device may perform fewer operations, to reduce the power consumption of the second electronic device.

According to a fifth aspect, this application provides a method for controlling device power consumption, applied to a first electronic device. The first electronic device is connected to a second electronic device. The first electronic device provides a network access capability for the second electronic device. The method includes: After the first electronic device receives a first notification sent by the second electronic device, the second electronic device skips sending, after determining that a network status changes, a network status change notification to the first electronic device, where the network status change notification includes a changed network status of the first electronic device; and after the first electronic device receives a second notification sent by the second electronic device, the first electronic device sends a network status change notification to the first electronic device, where the second notification indicates that the first electronic device is allowed to send a network status change notification.

In the foregoing embodiment, because the second electronic device can send the first notification to the first electronic device before entering the sleep phase, to indicate the first electronic device not to send the network status change notification, the second electronic device may be prevented from being woken up in the sleep phase. After the second electronic device enters the non-sleep phase, the first electronic device sends the second notification to the second electronic device, to indicate that the second electronic device can send the network status change notification, so that the first electronic device may obtain a correct network status, and normal use of the second electronic device by a user is not affected.

With reference to some embodiments of the fifth aspect, in some embodiments, the method further includes: receiving a network detection request sent by the second electronic device; the first electronic device determines a network detection result based on the network status of the second electronic device; and the first electronic device sends the network detection result to the second electronic device.

In the foregoing embodiment, in some cases, after the second electronic device initiates network detection, the first electronic device may directly determine, based on the network status of the first electronic device and/or a historical network detection result of the first electronic device, the network detection result of the network detection initiated by the second electronic device, and return the network detection result to the second electronic device, to reduce power consumption of the first electronic device.

According to a sixth aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions, so that the electronic device is enabled to perform the following operations: The second electronic device updates, after receiving, in a non-sleep phase, a network status change notification sent by the first electronic device, a network status based on the network status change notification, where the network status change notification includes a network status of the first electronic device; the second electronic device sends, before determining to enter a sleep phase from the non-sleep phase, a first notification to the first electronic device, where the first notification indicates that the first electronic device is prohibited from sending a network status change notification; and the second electronic device sends, after determining to enter the non-sleep phase from the sleep phase, a second notification to the first electronic device, where the second notification indicates that the first electronic device is allowed to send a network status change notification.

With reference to some embodiments of the sixth aspect, in some embodiments, the one or more processors are further configured to invoke the computer instructions, so that the electronic device is enabled to perform the following operation: The second electronic device disables a first data channel before the second electronic device determines to enter the sleep phase from the non-sleep phase.

With reference to some embodiments of the sixth aspect, in some embodiments, the one or more processors are specifically configured to invoke the computer instructions, so that the electronic device is enabled to perform the following operation: The second electronic device configures the network status as no network or network unavailable.

According to a seventh aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions, so that the electronic device is enabled to perform the following operations: The second electronic device stores, after receiving, in a sleep phase, a network status change notification sent by the first electronic device, the network status change notification; the second electronic device updates, after entering a non-sleep phase from the sleep phase, a network status based on the network status change notification received in the sleep phase; and the second electronic device updates, after receiving, in the non-sleep phase, a network status change notification sent by the first electronic device, the network status based on the network status change notification received in the non-sleep phase.

With reference to some embodiments of the seventh aspect, in some embodiments, the one or more processors are further configured to invoke the computer instructions, so that the electronic device is enabled to perform the following operation: The second electronic device disables a first data channel before the second electronic device determines to enter the sleep phase from the non-sleep phase.

With reference to some embodiments of the seventh aspect, in some embodiments, the one or more processors are specifically configured to invoke the computer instructions, so that the electronic device is enabled to perform the following operation: The second electronic device configures the network status as no network or network unavailable.

According to an eighth aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions, so that the electronic device is enabled to perform the following operations: The second electronic device stores, after receiving, in a light sleep phase, a network status change notification sent by the first electronic device, the network status change notification; the second electronic device updates, after entering a non-sleep phase from the light sleep phase, a network status based on the network status change notification received in the light sleep phase; the second electronic device sends, before determining to enter a deep sleep phase from the non-sleep phase or the light sleep phase, a first notification to the first electronic device, where the first notification indicates the first electronic device not to send a network status change notification, or the first notification is used to determine that the first electronic device is in the deep sleep phase; and the second electronic device sends, after entering the non-sleep phase from the deep sleep phase, a second notification to the first electronic device, where the second notification indicates that the first electronic device is allowed to send a network status change notification, or the second notification is used to determine that the second electronic device is in the non-sleep phase.

With reference to some embodiments of the eighth aspect, in some embodiments, the one or more processors are further configured to invoke the computer instructions, so that the electronic device is enabled to perform the following operation: The second electronic device disables a first data channel before the second electronic device determines to enter the sleep phase from the non-sleep phase.

With reference to some embodiments of the eighth aspect, in some embodiments, the one or more processors are specifically configured to invoke the computer instructions, so that the electronic device is enabled to perform the following operation: The second electronic device configures the network status as no network or network unavailable.

According to a ninth aspect, an embodiment of this application provides an electronic device. The electronic device includes one or more processors and a memory. The memory is coupled to the one or more processors. The memory is configured to store computer program code. The computer program code includes computer instructions. The one or more processors invoke the computer instructions, so that the electronic device is enabled to perform the following operations: After the first electronic device receives a first notification sent by the second electronic device, the second electronic device skips sending, after determining that a network status changes, a network status change notification to the first electronic device, where the network status change notification includes a changed network status of the first electronic device; and after the first electronic device receives a second notification sent by the second electronic device, the first electronic device sends a network status change notification to the first electronic device, where the second notification indicates that the first electronic device is allowed to send a network status change notification.

With reference to some embodiments of the ninth aspect, in some embodiments, the one or more processors are further configured to invoke the computer instructions, so that the electronic device is enabled to perform the following operations: receiving a network detection request sent by the second electronic device; the first electronic device determines a network detection result based on the network status of the second electronic device; and the first electronic device sends the network detection result to the second electronic device.

According to a tenth aspect, an embodiment of this application provides a chip system. The chip system is applied to an electronic device. The chip system includes one or more processors. The processor is configured to invoke computer instructions, so that the electronic device is enabled to perform the method according to any one of the second aspect, the third aspect, the fourth aspect, the fifth aspect, the possible implementations of the second aspect, the possible implementations of the third aspect, the possible implementations of the fourth aspect, and the possible implementations of the fifth aspect.

According to an eleventh aspect, an embodiment of this application provides a computer program product including instructions. When the computer program product runs on an electronic device, the electronic device is enabled to perform the method according to any one of the second aspect, the third aspect, the fourth aspect, the fifth aspect, the possible implementations of the second aspect, the possible implementations of the third aspect, the possible implementations of the fourth aspect, and the possible implementations of the fifth aspect.

According to a twelfth aspect, an embodiment of this application provides a computer-readable storage medium, including instructions. When the instructions are run on an electronic device, the electronic device is enabled to perform the method according to any one of the second aspect, the third aspect, the fourth aspect, the fifth aspect, the possible implementations of the second aspect, the possible implementations of the third aspect, the possible implementations of the fourth aspect, and the possible implementations of the fifth aspect.

It may be understood that the electronic device provided in the sixth aspect, the electronic device provided in the seventh aspect, the electronic device provided in the eighth aspect, the electronic device provided in the ninth aspect, the chip system provided in the tenth aspect, the computer program product provided in the eleventh aspect, and the computer storage medium provided in the twelfth aspect are all configured to perform the method provided in embodiments of this application. Therefore, for beneficial effects that can be achieved by the electronic device provided in the sixth aspect, the electronic device provided in the seventh aspect, the electronic device provided in the eighth aspect, the electronic device provided in the ninth aspect, the chip system provided in the tenth aspect, the computer program product provided in the eleventh aspect, or the computer storage medium provided in the twelfth aspect, refer to the beneficial effects in the corresponding method. Details are not described herein again.

### BRIEF DESCRIPTION OF DRAWINGS

FIG. 1 is a diagram of an example in which power consumption of a second electronic device changes with different states when the second electronic device is not interfered with by another electronic device according to an embodiment of this application;
FIG. 2 is a diagram of an example of impact of a network status change of a first electronic device on power consumption of a second electronic device according to an embodiment of this application;
FIG. 3 is a diagram of an example of a procedure of a method for controlling device power consumption according to an embodiment of this application;
FIG. 4 is a diagram of an example of a data channel according to an embodiment of this application;
FIG. 5 is a diagram of an example of power consumption of a second electronic device generated after a first electronic device and the second electronic device perform the method for controlling device power consumption shown in FIG. 3 according to an embodiment of this application;
FIG. 6 is a diagram of another example of a procedure of a method for controlling device power consumption according to an embodiment of this application;
FIG. 7 is a diagram of an example of power consumption of a second electronic device generated after the second electronic device performs the method for controlling device power consumption shown in FIG. 6 according to an embodiment of this application;
FIG. 8 is a diagram of another example of a procedure of a method for controlling device power consumption according to an embodiment of this application;
FIG. 9 is a diagram of an example of power consumption of a second electronic device generated after the second electronic device performs the method for controlling device power consumption shown in FIG. 8 according to an embodiment of this application;
FIG. 10 is a diagram of an example of a network detection procedure according to an embodiment of this application;
FIG. 11 is a diagram of another example of a procedure of a method for controlling device power consumption according to an embodiment of this application;
FIG. 12 is a diagram of an example of a hardware structure of an electronic device according to an embodiment of this application;
FIG. 13A is a diagram of an example of a software architecture of a second electronic device according to an embodiment of this application; and
FIG. 13B is a diagram of an example of a software architecture of a system including a second electronic device and a first electronic device according to an embodiment of this application.

### DESCRIPTION OF EMBODIMENTS

Terms used in the following embodiments of this application are merely intended to describe specific embodiments, but are not intended to limit this application. As used in this specification and the claims of this application, a singular expression form, "one", "a", "said", "foregoing", "the", or "this", is intended to also include a plural expression form, unless clearly indicated to the contrary in the context. It should also be understood that the term "and/or" used in this application means and includes any or all possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application program or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display screen of the electronic device.

In embodiments of this application, a first electronic device is an electronic device having a network access capability, for example, an electronic device like a mobile phone. The first electronic device provides a network proxy for a second electronic device. The second electronic device is a wearable electronic device like a band, a watch, or glasses, or may be an electronic device like a tablet computer, or may be a smart home device like a refrigerator. That the first electronic device provides the network proxy for the second electronic device means that, after the first electronic device establishes a connection to the second electronic device, the second electronic device may send a network access request to the first electronic device, and the first electronic device forwards the network access request to a server in the internet after receiving the network access request. Correspondingly, after receiving a response to the network request from a network device side, the first electronic device also forwards the response to the second electronic device.

Optionally, in some embodiments of this application, the second electronic device, like a watch into which a SIM card may be inserted, a watch with a built-in e-SIM card, or a watch that can support a Wi-Fi function, has a network access capability. Optionally, in some embodiments of this application, the second electronic device, like a band, does not have a network access capability.

Because a use habit of a consumer of a wearable electronic device like a watch or a band is not the same as a use habit of an electronic device like a computer, a user does not charge the wearable electronic device while using the wearable electronic device. In addition, a battery capacity of the wearable electronic device is generally small. Therefore, to improve user experience as much as possible, power consumption of the electronic device needs to be reduced as much as possible to improve a battery life of the electronic device, without affecting user experience and normal running of a function of the electronic device.

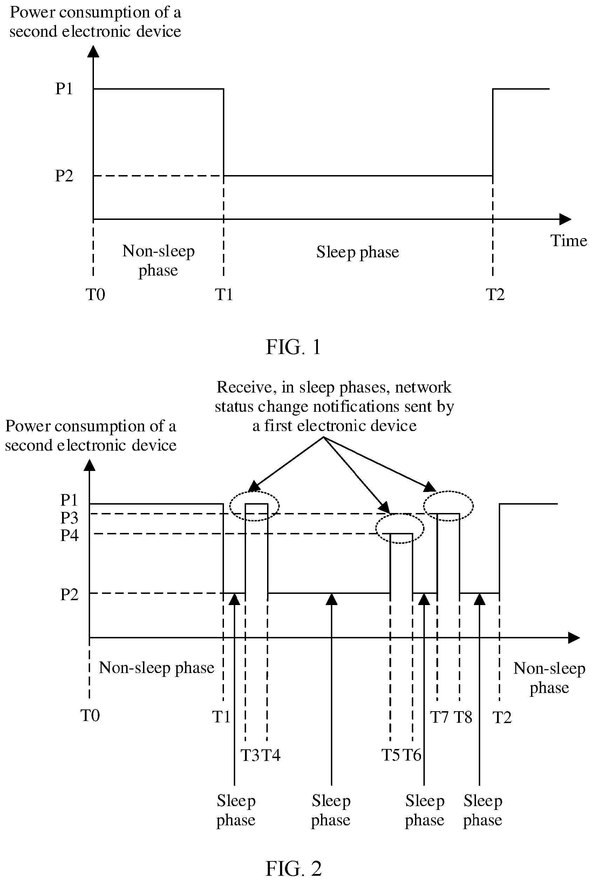

FIG. 1 is a diagram of an example in which power consumption of a second electronic device changes with different states when the second electronic device is not interfered with by another electronic device according to an embodiment of this application.

From a moment T0 to a moment T1, the second electronic device is in a non-sleep phase, and the power consumption of the second electronic device is P1. From the moment T1 to a moment T2, the second electronic device is in a sleep phase, and the power consumption of the second electronic device is P2. P2 is lower than P1.

When the second electronic device is in a non-worn state or a sleep state, the second electronic device enters the sleep phase, and the power consumption of the second electronic device in the sleep phase is low. When the second electronic device is in a worn state or a non-sleep state, the second electronic device enters the non-sleep phase, and the power consumption of the electronic device in the non-sleep phase is high. The sleep state is a state entered by the second electronic device after the second electronic device directly or indirectly confirms that a user falls asleep. When the second electronic device is a wearable electronic device and is worn by the user, the second electronic device may determine, based on an obtained physiological parameter of the user, whether the user falls asleep, and further determine whether the second electronic device enters the sleep state. When the second electronic device is not a wearable electronic device, for example, a tablet computer, the second electronic device may predict, based on ambient light, time, and/or a habit of the user, whether the user falls asleep, and further determine whether the second electronic device enters the sleep state.

It should be noted that a condition for the second electronic device to enter the sleep phase is not limited to the non-worn state, the sleep state, or the like. Correspondingly, a condition for the second electronic device to enter the non-sleep phase is not limited to the worn state, the non-sleep state, or the like.

Optionally, in some embodiments of this application, when the first electronic device establishes a connection to the second electronic device, a network access capability of the second electronic device is implemented based on a network access capability of the first electronic device. When a network status of the first electronic device does not change, power consumption change trend of the second electronic device is the same as a power consumption change trend of the second electronic device in FIG. 1. The second electronic device establishes a connection to the first electronic device by using a near field communication technology, and the second electronic device is connected to the internet through a network proxy provided by the first electronic device. The near field communication technology may include one or more of communication protocols such as Bluetooth, Wi-Fi, NFC, and Apple wireless direct link (Apple Wireless Direct Link, AWDL).

That the network status of the first electronic device does not change means that the first electronic device is always in a network available status or a network unavailable status. The network unavailable status means that the electronic device cannot access the internet. For example, the first electronic device disables a data traffic function, and disables a Wi-Fi function; or the first electronic device accesses, through Wi-Fi, a local area network that is not connected to the internet.

Optionally, in some embodiments of this application, that the network status of the first electronic device does not change means that a network standard of the first electronic device does not change, and the network standard may be 2G, 3G, 4G, 5G, Wi-Fi, or the like. Optionally, in some embodiments of this application, that the network status of the first electronic device does not change means that a status of a network, that is, a charging network or a free network, of the first electronic device does not change.

After the electronic device determines that the network status changes, an operating system on the electronic device sends a new network status to an application on the electronic device through broadcast (broadcast), so that the application on the electronic device can obtain the updated network status in time. The broadcast is a system component, and is configured to perform cross-process communication.

For example, an Android (Android) system is used as an example. A connection manager (ConnectivityManager) of the Android system is configured to notify the application of the current network status of the electronic device. Because the network status may change at any time, and most applications need to determine a latest network status of the electronic device, the application usually registers a callback with the ConnectivityManager, to determine the latest network status in time after the network status changes. Alternatively, the application registers a NetworkReceiver to receive a network status broadcast sent by the ConnectivityManager after the network status changes.

When the first electronic device establishes the connection to the second electronic device, and the first electronic device provides the network proxy for the second electronic device, after the network status of the first electronic device changes, the first electronic device needs to send the network status to the second electronic device, so that an operating system and an application on the second electronic device can determine a correct network status.

After the second electronic device receives a network status change notification sent by the first electronic device, the second electronic device may determine the network status of the first electronic device based on the network status change notification, and may use the network status of the first electronic device as a network status of the second electronic device. After determining that the network status changes, the second electronic device synchronizes the current network status to the application on the second electronic device.

In some implementations, after the second electronic device determines that the network status changes, the operating system and/or the application on the second electronic device further initiates network detection. For example, in an Android system, the operating system or the application on the second electronic device may initiate network detection by invoking an isReachable() method provided by an InetAddress class or a reportNetworkConnectivity() method provided by a Connectivitymanager class, to further determine whether the second electronic device is connected to a specific server. An address of the server may be configured, and the server may be determined in a form of a domain name or a specific IP address.

In addition, if the second electronic device receives the network status change notification in the sleep phase, the second electronic device is further woken up. During a short wake-up period, the second electronic device may further perform some operations for another service or another application.

FIG. 2 is a diagram of an example of impact of a network status change of a first electronic device on power consumption of a second electronic device according to an embodiment of this application.

The second electronic device in FIG. 2 is completely the same as the second electronic device in FIG. 1. A first electronic device establishes a connection to the second electronic device. The first electronic device provides a network proxy for the second electronic device.

A difference between content shown in FIG. 2 and FIG. 1 lies in that, as shown in FIG. 2, from a moment T0 to a moment T1, the second electronic device is in a non-sleep phase, and power consumption of the second electronic device is P1. At the moment T1, the second electronic device enters a sleep phase, and the power consumption of the second electronic device is P2. At a moment T3, because a network status of the first electronic device changes, the second electronic device receives a network status change notification sent by the first electronic device, and the second electronic device is woken up. From the moment T3 to a moment T4, because the second electronic device is woken up, the power consumption of the second electronic device is P1. From the moment T4 to a moment T5, the second electronic device restores to the sleep phase, and the power consumption of the second electronic device is P2. At the moment T5, because the network status of the first electronic device changes, the second electronic device receives a network status change notification sent by the first electronic device, and the second electronic device is woken up. From the moment T5 to a moment T6, the second electronic device is in the non-sleep phase, and the power consumption of the second electronic device is P4. From the moment T6 to a moment T7, the second electronic device is in the sleep phase, and the power consumption of the second electronic device is P2. At the moment T7, because the network status of the first electronic device changes, the second electronic device receives a network status change notification sent by the first electronic device, and the second electronic device is woken up. From the moment T7 to a moment T8, because the second electronic device is woken up, the power consumption of the second electronic device is P3. From the moment T8 to a moment T2, the second electronic device restores to the sleep phase, and the power consumption of the second electronic device is P2.

P1 is greater than P3, P3 is greater than P4, and P4 is greater than P2. At the moment T3, the moment T5, and the moment T7, the second electronic device receives the network status change notifications sent by the first electronic device. Further, in three time periods, namely, from the moment T3 to the moment T4, from the moment T5 to the moment T6, and from the moment T7 to the moment T8, the second electronic device needs to read the network status change notifications from a bottom-layer Bluetooth module or another module that bears a connection between the first electronic device and the second electronic device, obtain an updated network status through parsing, and update the network status to the ConnectivityManager. Therefore, the power consumption of the second electronic device in the three time periods is higher than P2.

Although the second electronic device responds to the network status change notification, the second electronic device is woken up by the network status change notification, and the second electronic device may further perform some operations for another service or another application. Therefore, each time the second electronic device is woken up by the network status change notification, power consumption and wake-up duration of the second electronic device may be different.

Because a network status change notification is equivalent to an interrupt, at the moment T4, the moment T6, and the moment T8, after completing processing the interrupt, the second electronic device restores to a status before the interrupt, that is, the second electronic device enters the sleep phase. Alternatively, optionally, in some embodiments of this application, after processing the network status change notification, the second electronic device further needs to determine whether a condition for entering the sleep phase is met, to further determine whether to enter the sleep phase. In this case, at the moment T4, the moment T6, and the moment T8, the second electronic device determines whether the condition for entering the sleep phase is met.

The change of the network status of the first electronic device may include: a change between a network available status and a network available status of the first electronic device.

Optionally, in some embodiments of this application, the change of the network status of the first electronic device may further include a change of a network standard of the first electronic device. The change of the network standard of the first electronic device includes a change when the first electronic device is connected to a 2G network, a 3G network, a 4G network, a 5G network, or a Wi-Fi network.

Optionally, in some embodiments of this application, the change of the network status of the first electronic device may further include a change of whether a network connected to the first electronic device is a charging network.

In some embodiments, a case in which the network status of the first electronic device does not change and a case in which the network status of the first electronic device changes may be a complementary set of each other.

By comparing the content shown in FIG. 1 and FIG. 2, it can be learned that when the first electronic device establishes the connection to the second electronic device, and the network status of the first electronic device changes, the first electronic device sends the network status change notification to the second electronic device. Therefore, the second electronic device needs to process the notification, the power consumption of the second electronic device increases, and a battery life of the second electronic device is reduced.

Therefore, to reduce the power consumption of the second electronic device, embodiments of this application provide a method for controlling device power consumption, a system, and an electronic device. When a second electronic device is connected to a first electronic device, and the first electronic device provides a network proxy for the second electronic device, according to the method for controlling device power consumption provided in embodiments of this application, when the second electronic device is in a sleep phase, the second electronic device does not respond to a network status change notification sent by the first electronic device. Therefore, operations that need to be performed by the second electronic device after the second electronic device receives the network status change notification can be reduced, and power consumption of the second electronic device is reduced.

Optionally, in some embodiments of this application, before the second electronic device enters the sleep phase, the second electronic device may further send a first notification to the first electronic device, to indicate the first electronic device not to send the network status change notification to the second electronic device after determining that a network status changes. Because the second electronic device does not receive the network status change notification, and further the second electronic device is not woken up, the power consumption of the second electronic device in the sleep phase may always be maintained at a low level. In addition, because the first electronic device does not need to send the network status change notification to the second electronic device after the network status changes, power consumption of the first electronic device is also reduced.

Optionally, in some embodiments of this application, before the second electronic device enters the sleep phase, a data transmission channel corresponding to the network proxy may be disabled on the second electronic device side and/or the first electronic device may be notified to disable a data transmission channel corresponding to the network proxy. Because the second electronic device disables the data channel corresponding to the network proxy, resources are further released, and the power consumption of the second electronic device is further reduced. In addition, because the first electronic device disables the data channel corresponding to the network proxy, the power consumption of the first electronic device can be reduced.

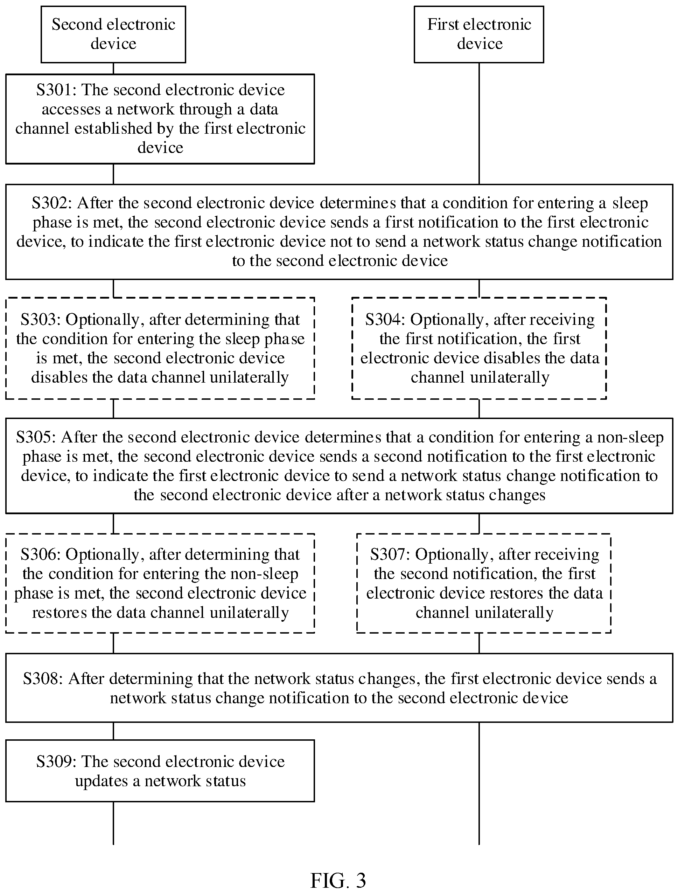

FIG. 3 is a diagram of an example of a procedure of a method for controlling device power consumption according to an embodiment of this application.

S301: A second electronic device accesses a network through a data channel established by a first electronic device.

The first electronic device establishes a connection to the second electronic device, and the first electronic device provides a network proxy for the second electronic device.

After the first electronic device provides the network proxy for the second electronic device, the first electronic device establishes a data channel for the second electronic device, to forward data that is used for network access and that is sent by the second electronic device. The data channel is a channel used to transmit data that is sent by the first electronic device and that is used for exchanging data with a server in the internet.

The data channel is not equivalent to the connection between the first electronic device and the second electronic device.

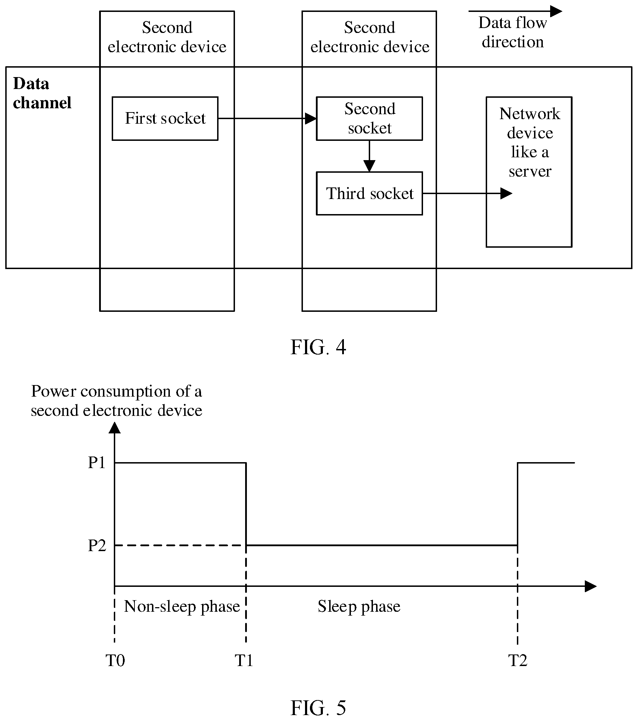

Optionally, in some embodiments of this application, the data channel may be a channel that is provided by a socket (socket) and that is used to transmit the data that is used for network access and that is sent by the second electronic device, for example, content shown in FIG. 4.

FIG. 4 is a diagram of an example of a data channel according to an embodiment of this application.

A protocol stack of the second electronic device establishes a first socket (socket). The first socket is used to send, to the first electronic device, the data for network access of the second electronic device.

Correspondingly, a protocol stack on the first electronic device establishes a second socket and a third socket. The second socket is configured to receive data for network access sent by the first electronic device. The third socket is configured to send, to a network device like a server, the data for network access sent by the second electronic device. Alternatively, the third socket is configured to send, to the network device like the server, the data for network access sent by the second electronic device and the data for network access of the first electronic device.

The first socket and the second socket are a pair of sockets (pair socket).

As shown in the content in FIG. 4, the data channel is a channel that is formed by the first socket, the second socket, and the third socket and that is used to transmit data.

Optionally, it may be considered that a data channel on the first electronic device includes the second socket and the third socket, and a data channel on the second electronic device includes the first socket.

Optionally, in some embodiments of this application, the first socket is further configured to receive data sent by the first electronic device. The second socket is further configured to send data to the second electronic device. The third socket is further configured to receive data sent by the network device like the server.

Optionally, in some embodiments of this application, the data sent by the second electronic device may not carry a source IP, but the second electronic device adds the source IP, to implement a network proxy.

Optionally, in some embodiments of this application, data in the first socket and the second socket is a packet at a transport layer or a packet of an application.

It should be noted that the data channel may alternatively be implemented in another manner, that is, the data channel does not necessarily need to be implemented via a socket. For example, the data channel may be alternatively implemented through a Wearable Data Layer API provided by a Google Play service, or may be implemented through another API pre-agreed on by the second electronic device and the first electronic device.

S302: After the second electronic device determines that a condition for entering a sleep phase is met, the second electronic device sends a first notification to the first electronic device, to indicate the first electronic device not to send a network status change notification to the second electronic device.

The second electronic device may determine, in a plurality of manners, whether the condition for entering the sleep phase is met, and this is not limited herein. For example, when the second electronic device is a wearable electronic device like a band or a watch, after the second electronic device determines that the second electronic device is in a non-worn state, a screen-off state, or a sleep state, the second electronic device determines that the condition for entering the sleep phase is met. For another example, when the second electronic device is a wearable electronic device like a band or a watch, after the second electronic device determines that the second electronic device is in a non-worn state for preset duration, or after the second electronic device determines that the second electronic device is in a screen-off state for preset duration, or after the second electronic device determines that a user is in a sleep state for preset duration, the second electronic device determines that the condition for entering the sleep phase is met.

Optionally, in some embodiments of this application, the first notification may be used to notify the first electronic device that the second electronic device is in the sleep phase.

Optionally, in some embodiments of this application, the second electronic device may further determine, based on a parameter (excluding a physiological parameter of the user) in an ambient optical sensor or another sensor and/or historical sleep data of the user, whether the second electronic device is in the sleep state, and further determine whether the second electronic device enters the sleep phase.

Optionally, in some embodiments of this application, the first electronic device may send an instruction to the second electronic device based on that a parameter in the ambient optical sensor or another sensor meets a preset condition, where the instruction instructs the second electronic device to enter the sleep phase. After receiving the instruction, the second electronic device may determine that the condition for entering the sleep phase is met.

Optionally, in some embodiments of this application, the first electronic device and/or the second electronic device may further disable the data channel corresponding to the network proxy, as shown in steps S303 and S304 respectively.

S303: Optionally, after determining that the condition for entering the sleep phase is met, the second electronic device disables the data channel unilaterally.

For a concept of the data channel, refer to the foregoing text descriptions corresponding to FIG. 4. Details are not described herein again. The data channel disabled unilaterally by the second electronic device may be referred to as a first data channel. As shown in the content in FIG. 4, the first data channel includes a first socket, and the first data channel may alternatively be referred to as a data channel on the second electronic device.

When the data channel is established in another manner, the second electronic device correspondingly disables the established data channel.

After the second electronic device disables the data channel unilaterally, the connection between the first electronic device and the second electronic device may be connected, or may be disconnected. After the second electronic device disables the data channel unilaterally, the second electronic device cannot be connected to the server in the internet through the network proxy provided by the first electronic device.

Optionally, in some embodiments of this application, that the second electronic device disables the data channel unilaterally means that the second electronic device changes a network status in a ConnectivityManager to no network or network unavailable. When it is determined that the network status is no network or network unavailable, an application and/or an operating system on the second electronic device may automatically release resources prepared for network access. The application and/or the operating system may not perform an operation of waking up the electronic device when the network status is no network or network unavailable. For example, a news-type application does not request the server to push news when a network status is no network or network unavailable.

Before modifying the network status in the ConnectivityManager to no network or network unavailable, the second electronic device may store a current network status, and restore the stored network status of the second electronic device after step S306 is performed.

It may be understood that the second electronic device may further reduce power consumption of the second electronic device by disabling the data channel unilaterally.

Optionally, in some embodiments of this application, step S303 may occur before step S302.

S304: Optionally, after receiving the first notification, the first electronic device disables the data channel unilaterally.

For a concept of the data channel, refer to the foregoing text descriptions corresponding to FIG. 4. Details are not described herein again. That the first electronic device disables the data channel unilaterally means that the first electronic device releases resources prepared for the second electronic device to access the network, or disables the network proxy provided for the second electronic device. The data channel disabled unilaterally by the first electronic device may be referred to as a second data channel. As shown in the content in FIG. 4, the first data channel includes a second socket and a third socket, and the second data channel may alternatively be referred to as a data channel on the first electronic device.

After the first electronic device disables the data channel unilaterally, the connection between the first electronic device and the second electronic device may be connected, or may be disconnected.

When the data channel is established in another manner, the first electronic device correspondingly disables the established data channel.

Optionally, in some embodiments of this application, when the third socket is configured only to send data of the second electronic device, the third socket may be further disabled.

It may be understood that, the first electronic device may reduce power consumption of the first electronic device by disabling the data channel unilaterally.

S305: After the second electronic device determines that a condition for entering a non-sleep phase is met, the second electronic device sends a second notification to the first electronic device, to indicate the first electronic device to send a network status change notification to the second electronic device after a network status changes.

The non-sleep phase includes that the second electronic device is in a non-sleep state, in a worn state, or in a screen-on state, or an application on the second electronic device is using a network (for example, downloading, playing multimedia online, or navigation).

Corresponding to step S302, the second electronic device may also determine, in a plurality of manners, whether the condition for entering the non-sleep phase is met. This is not limited herein. For specific content, refer to the text description in step S302 above.

The second electronic device sends the second notification to the first electronic device. The second notification indicates that the first electronic device can send the network status change notification to the second electronic device.

Optionally, in some embodiments of this application, the first notification may be used to notify the first electronic device that the second electronic device is in the non-sleep phase.

Optionally, in some embodiments of this application, after the second electronic device is in the sleep phase, the first electronic device and/or the second electronic device disable/disables the data channel corresponding to the network proxy, and after the second electronic device switches from the sleep phase to the non-sleep phase, the data channel corresponding to the network proxy needs to be correspondingly restored, as shown in steps S306 and S307 respectively.

Optionally, in some embodiments of this application, after the first electronic device receives the second notification, the first electronic device may send a current network status of the first electronic device to the second electronic device, so that the second electronic device can quickly and accurately determine the current network status. This may further avoid that the network status of the second electronic device is inaccurate because the network status of the first electronic device changes when the second electronic device is in the sleep phase and the second electronic device is not notified in time.

Optionally, in some embodiments of this application, the second notification may include the network status stored by the second electronic device before the second electronic device enters the sleep phase, and the first electronic device determines, based on the second notification, whether the current network status of the second electronic device needs to be updated. For example, before the second electronic device enters the sleep phase, the second electronic device determines, based on the network status of the first electronic device, that the network status of the second electronic device is a 4G network. After the second electronic device enters the sleep phase and switches from the sleep phase to the non-sleep phase, the network status of the first electronic device switches from the 4G network to a Wi-Fi network and then switches to the 4G network. After the first electronic device receives the second notification including a 4G network identifier, the first electronic device does not send the latest network status to the second electronic device, and the second electronic device determines, based on the previously stored network status, that the current network status is the 4G network.

S306: Optionally, after determining that the condition for entering the non-sleep phase is met, the second electronic device restores the data channel unilaterally.

Corresponding to step S303, if the second electronic device disables the data channel unilaterally in step S303, the second electronic device restores the data channel unilaterally, that is, restores the first socket.

Corresponding to step S303, that the second electronic device restores the data channel unilaterally means that the second electronic device changes the network status in the ConnectivityManager to connected; or the second electronic device restores the network status in the ConnectivityManager to the stored network status of the second electronic device.

S307: Optionally, after receiving the second notification, the first electronic device restores the data channel unilaterally.

Optionally, corresponding to step S304, the first electronic device restores the data channel unilaterally, that is, restores the second socket. In addition, when the first electronic device disables the third socket in step S304, the third socket is correspondingly restored.

Because the second electronic device sends the second notification to the first electronic device, and the second electronic device may determine, based on the second notification, that the second electronic device is in the non-sleep phase, the first electronic device may restore the data channel unilaterally.

S308: After determining that the network status changes, the first electronic device sends a network status change notification to the second electronic device.

For the change of the network status and the network status change notification, refer to the foregoing text descriptions. Details are not described herein again.

S309: The second electronic device updates a network status.

The second electronic device updates the network status in response to the received network status change notification.

For content of updating the network status by the second electronic device, refer to the foregoing text descriptions corresponding to FIG. 2. Details are not described herein again.

With reference to the procedure shown in FIG. 3, it may be understood that the second electronic device sends the first notification to the first electronic device, so that the second electronic device does not receive the network status change notification in the sleep phase, and is not woken up by the network status change notification. In this way, the power consumption of the second electronic device is reduced and the battery life of the second electronic device is improved.

Optionally, in some embodiments of this application, after the first electronic device is disconnected from and reconnected to the second electronic device, the first electronic device may initiate a request to the second electronic device, to determine a phase at which the second electronic device is located. The second electronic device may reply the phase in which the second electronic device is located, or if the second electronic device does not reply, the first electronic device determines that the second electronic device is in the sleep phase.

Optionally, in some embodiments of this application, after connecting to any first electronic device, the second electronic device in the sleep phase may send the first notification to the first electronic device.

Optionally, in some embodiments of this application, the second electronic device may not send the first notification to the first electronic device, but does not respond, in the sleep phase, to the received network status change notification sent by the first electronic device.

FIG. 5 is a diagram of an example of power consumption of a second electronic device generated after a first electronic device and the second electronic device perform the method for controlling device power consumption shown in FIG. 3 according to an embodiment of this application.

Before entering the sleep phase, the second electronic device sends the first notification to the first electronic device, so that after determining that the network status changes, the second electronic device does not send the network status change notification to the first electronic device. Therefore, from a moment T1 to a moment T2, the second electronic device does not receive the network status change notification, so that the second electronic device can maintain low power consumption P2.

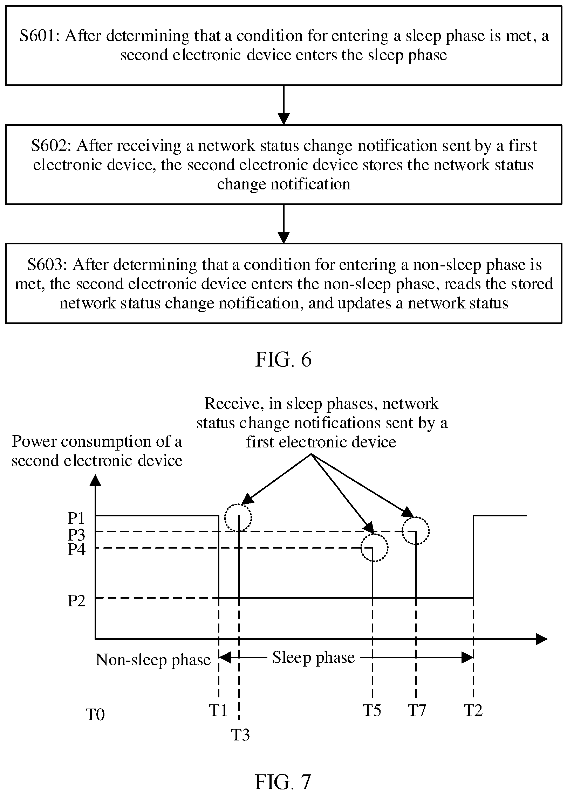

FIG. 6 is a diagram of another example of a procedure of a method for controlling device power consumption according to an embodiment of this application.

In content shown in FIG. 6, a second electronic device establishes a connection to a first electronic device, and the first electronic device provides a network proxy for the second electronic device, that is, the second electronic device accesses a network by using a network capability provided by the first electronic device.

S601: After determining that a condition for entering a sleep phase is met, the second electronic device enters the sleep phase.

For the condition for entering the sleep phase, refer to the text descriptions in step S302 above. Details are not described herein again.

Optionally, in some embodiments of this application, after determining that the condition for entering the sleep phase is met, the second electronic device may also disable a transmission channel unilaterally.

When the second electronic device is in the sleep phase, a transmission channel on the first electronic device may be disabled or may not be disabled. For example, if the first electronic device determines that the transmission channel on the second electronic device is already disabled, the first electronic device may disable the transmission channel on the first electronic device.

S602: After receiving a network status change notification sent by the first electronic device, the second electronic device stores the network status change notification.

After receiving the network status change notification, the second electronic device does not parse the network status change notification to obtain a latest network status. Instead, the second electronic device first stores the network status change notification locally, or the second electronic device stores an updated network status locally after parsing the network status change notification.

S603: After determining that a condition for entering a non-sleep phase is met, the second electronic device enters the non-sleep phase, reads the stored network status change notification, and updates a network status.

After entering the non-sleep phase, the second electronic device reads a latest network status change notification or the latest network status locally, and then notifies an application on the second electronic device of the latest network status via a connection manager.

Optionally, in some embodiments of this application, after determining that the condition for entering the non-sleep phase is met, the second electronic device determines whether the transmission channel is disabled, and restores the data channel unilaterally when the transmission channel is disabled.

With reference to the content shown in FIG. 6, it may be understood that, because the second electronic device does not need to respond to the network status change notification in the sleep phase, power consumption of the second electronic device is reduced, and a battery life of the second electronic device is improved.

FIG. 7 is a diagram of an example of power consumption of the second electronic device generated after the second electronic device performs the method for controlling device power consumption shown in FIG. 6 according to an embodiment of this application.

A difference between content shown in FIG. 7 and content shown in FIG. 2 lies in that, at the moment T3, after the second electronic device receives a network status change notification sent by the first electronic device, the power consumption of the second electronic device is P1. Because the second electronic device does not need to respond to the network status change notification, the power consumption of the second electronic device is reduced to P2 after a very short time. Similarly, at the moment T5, after the second electronic device receives a network status change notification sent by the first electronic device, the power consumption of the second electronic device is P3, and the power consumption of the second electronic device is reduced to P2 after a very short time. Similarly, at the moment T7, after the second electronic device receives a network status change notification sent by the first electronic device, the power consumption of the second electronic device is P4, and the power consumption of the second electronic device is reduced to P2 after a very short time.

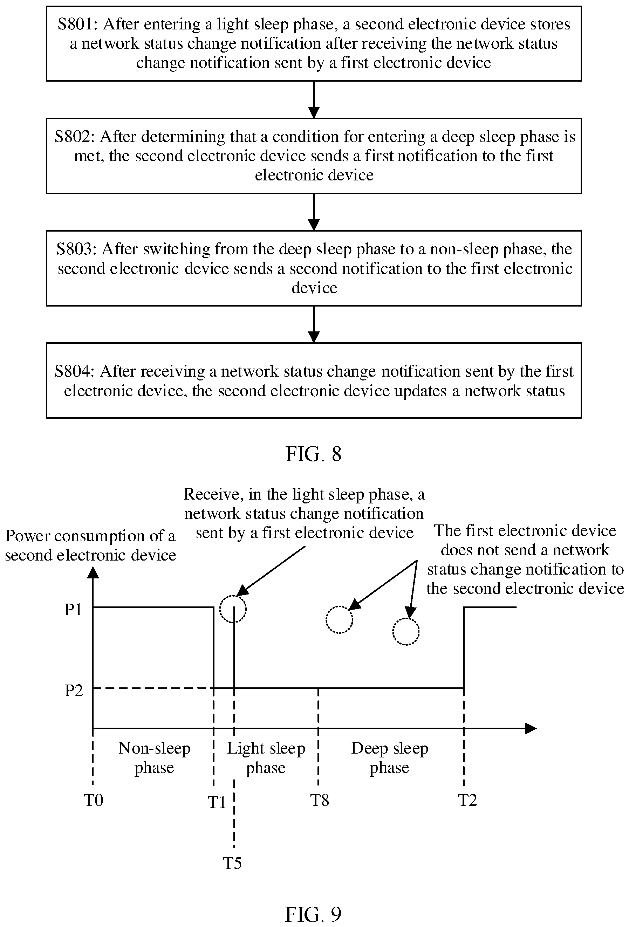

FIG. 8 is a diagram of another example of a procedure of a method for controlling device power consumption according to an embodiment of this application.

Optionally, in some embodiments of this application, a sleep phase may be further divided into a light sleep phase and a deep sleep phase.

When a second electronic device is a wearable electronic device, a condition for the second electronic device to enter the light sleep phase and a condition for the second electronic device to enter the deep sleep phase are shown in the following Table 1.

Table 1 is a diagram of examples of the condition for the second electronic device to enter the light sleep phase and the condition for the second electronic device to enter the deep sleep phase according to an embodiment of this application.

**Table 1**

| | Light sleep phase | Deep sleep phase |
|---|---|---|
| Duration of a non-worn state is from U1 to U2 | √ | × |
| Duration of the non-worn state is greater than U2 | × | √ |
| Duration of a sleep state is from U3 to U4 | √ | × |
| Duration of the sleep state is greater than U4 | × | √ |
| A first electronic device is in a do-not-disturb phase | × | √ |
| Duration of a screen-off state is greater than U5 | √ | × |

As shown in Table 1, when the second electronic device determines that the duration of the non-worn state is from U1 to U2, the second electronic device determines to enter the light sleep phase. When the second electronic device determines that the duration of the non-worn state is greater than U2, the second electronic device determines to enter the deep sleep phase. When the second electronic device determines that the duration of the sleep state is from U3 to U4, the second electronic device determines to enter the light sleep phase. When the second electronic device determines that the duration of the sleep state is greater than U4, the second electronic device determines to enter the deep sleep phase. After the first electronic device is in the do-not-disturb phase, the first electronic device sends a message to the second electronic device, so that the second electronic device enters the deep sleep phase. When the second electronic device determines that the duration of the screen-off state is greater than U5, the second electronic device determines to enter the light sleep phase.

U1 and U3 may be 0. U2 and U4 may be positive infinity.

With reference to the content shown in Table 1, it can be learned that, in some cases, the second electronic device is in the light sleep phase before entering the deep sleep phase; and in some cases, the second electronic device may directly enter the deep sleep phase.

With reference to the content shown in Table 1, it can be learned that the second electronic device may independently determine whether to enter the light sleep phase or the deep sleep phase, or may be indicated by the first electronic device to enter a specific phase.

It should be noted that Table 1 is merely example content. In other words, the condition for entering the light sleep phase and the condition for entering the deep sleep phase shown in Table 1 are described as examples, and do not limit the condition for entering the light sleep phase and the condition for entering the deep sleep phase.

S801: After entering the light sleep phase, the second electronic device stores a network status change notification after receiving the network status change notification sent by the first electronic device.

For a response made by the second electronic device after the second electronic device enters the light sleep phase and receives the network status change notification sent by the first electronic device, refer to the text descriptions of step S602 above. Details are not described herein again.

Optionally, in some embodiments of this application, if the second electronic device enters a non-sleep phase from the light sleep phase, the second electronic device updates a network status based on a network status change notification received in the sleep phase.

S802: After determining that the condition for entering the deep sleep phase is met, the second electronic device sends a first notification to the first electronic device.

After the second electronic device determines that the condition for entering the deep sleep phase is met, for an operation performed by the second electronic device, refer to the text descriptions in step S302 and step S303 above. Details are not described herein again.

S803: After switching from the deep sleep phase to the non-sleep phase, the second electronic device sends a second notification to the first electronic device.

After the second electronic device switches from the deep sleep phase to the non-sleep phase, for an operation performed by the second electronic device, refer to the foregoing text description of step S305. Details are not described herein again.

S804: After receiving a network status change notification sent by the first electronic device, the second electronic device updates the network status.

For content of the network status change notification received by the second electronic device in the non-sleep phase, refer to the text descriptions in step S309 above.

FIG. 9 is a diagram of an example of power consumption of the second electronic device after the second electronic device performs the method for controlling device power consumption shown in FIG. 8 according to an embodiment of this application.

After entering the light sleep phase, the second electronic device does not send the first notification to the first electronic device, and then still receives, in the light sleep phase, the network status change notification sent by the second electronic device. Correspondingly, before determining to enter the deep sleep phase, the second electronic device sends the first notification to the first electronic device, to indicate the first electronic device not to send a network status change notification to the second electronic device.

A difference from the content shown in FIG. 2 lies in that, in comparison with the content shown in FIG. 2, at the moment T3, after the second electronic device receives the network status change notification sent by the first electronic device, the power consumption of the second electronic device is P1; after the moment T8, the second electronic device enters the deep sleep phase, and sends the first notification to the first electronic device before entering the deep sleep phase; and at the moment T5 and the moment T7, after determining that the network status changes, the first electronic device does not send the network status change notifications to the second electronic device. Therefore, the power consumption of the second electronic device does not change.

It is clear that, according to the method for controlling device power consumption provided in this embodiment of this application, the power consumption of the second electronic device can be reduced, and power consumption of the first electronic device can be reduced. With reference to the content shown in FIG. 6, the following describes, as an example, a procedure of a method for controlling device power consumption according to an embodiment of this application.

When a change of the network status of the second electronic device is caused by a change of a network status of the first electronic device, the second electronic device may not initiate network detection. This is because the first electronic device initiates network detection after the network status of the first electronic device changes after the network status of the first electronic device changes, to determine whether the first electronic device is connected to the internet. Therefore, the second electronic device does not need to initiate network detection. It may be understood that, because the second electronic device can reduce a quantity of times of initiating the network detection, the power consumption of the second electronic device can be reduced.

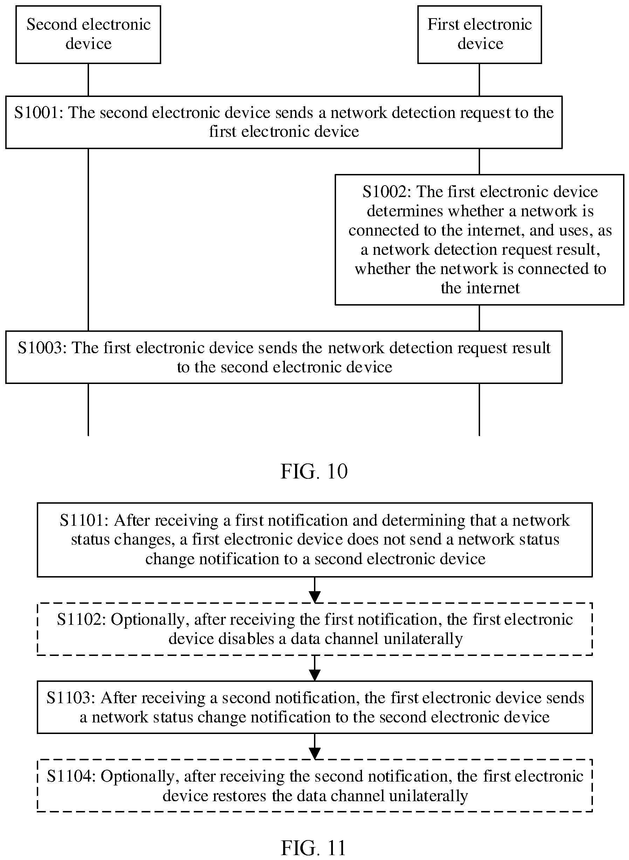

Optionally, in some embodiments of this application, if the application on the second electronic device actively initiates network detection or the second electronic device initiates a network detection request via the first electronic device in another case, the first electronic device may not forward network detection initiated by the second electronic device, as shown in content in FIG. 10.

FIG. 10 is a diagram of an example of a network detection procedure according to an embodiment of this application.

S1001: The second electronic device sends the network detection request to the first electronic device.

After the network status of the second electronic device changes, the second electronic device initiates network detection, or the application running on the second electronic device actively initiates network detection.

The second electronic device may initiate network detection in a plurality of cases. For example, the application on the second electronic device actively initiates network detection, or the second electronic device initiates network detection after the network status of the second electronic device changes or the second electronic device is reconnected to the first electronic device after the second electronic device is disconnected from the first electronic device.

S1002: The first electronic device determines whether a network is connected to the internet, and uses, as a network detection request result, whether the network is connected to the internet.

After the first electronic device receives the network detection request sent by the second electronic device, the first electronic device determines whether the first electronic device is connected to the internet without performing real network detection.

The first electronic device may determine, based on a historical network detection result of the first electronic device or the network status of the first electronic device, whether the first electronic device is connected to the internet.

Optionally, in some embodiments of this application, the content shown in FIG. 10 is applicable to a case in which the change of the network status of the second electronic device is caused by the first electronic device and a case in which the second electronic device is reconnected to the first electronic device after the second electronic device is disconnected from the first electronic device. To be specific, the second electronic device may add an identifier to the network detection request. The identifier is used to determine whether the network detection request is caused by the change of the network status of the second electronic device or is caused by a reconnection after a disconnection. Alternatively, the identifier indicates that the network detection request is initiated by the application on the second electronic device. Then, the first electronic device may determine, based on the identifier, whether to initiate real network detection, or directly return the network detection request result based on a current network status.

S1003: The first electronic device sends the network detection request result to the second electronic device.

The first electronic device may send the network detection result to the second electronic device, where the network detection result may be whether the first electronic device is connected to the internet.

With reference to the content shown in FIG. 10, it may be understood that, because the first electronic device may not perform real network detection after receiving the network detection request sent by the second electronic device, the power consumption of the first electronic device can be reduced.

Optionally, in some embodiments of this application, because the first electronic device performs network detection after the network status changes, the second electronic device may not perform the network detection after the second electronic device receives the network status change notification. It should be noted that a server to be detected when the first electronic device performs network detection may be different from a server to be detected when the second electronic device originally needs to perform network detection. Considering that the server is generally not networked, an incorrect result is generally not caused when the second electronic device does not perform network detection. Because the second electronic device may not perform network detection, the power consumption of the second electronic device can be reduced.

FIG. 11 is a diagram of another example of a procedure of a method for controlling device power consumption according to an embodiment of this application.

S1101: After receiving a first notification and determining that a network status changes, a first electronic device does not send a network status change notification to a second electronic device.

Optionally, in some embodiments of this application, if the first electronic device already sends an indication to the second electronic device before the first electronic device determines that the network status changes, and the indication indicates that the second electronic device enters a sleep phase, the first electronic device does not send the network status change notification to the second electronic device after determining that the network status changes.

Optionally, in some embodiments of this application, when the first electronic device disables a data channel unilaterally when the second electronic device is in the sleep phase, after the first electronic device determines that the network status changes, if the data channel on the first electronic device is already disabled, the first electronic device does not send a network status change notification to the second electronic device.

S1102: Optionally, after receiving the first notification, the first electronic device disables the data channel unilaterally.

If the data channel is not disabled after the first electronic device receives the second notification, the first electronic device disables the data channel unilaterally. For content of disabling the data channel unilaterally by the first electronic device, refer to the text descriptions in step S304. Details are not described herein again.

S1103: After receiving a second notification, the first electronic device sends a network status change notification to the second electronic device.

It may be understood that, after receiving the second notification, the first electronic device sends the network status change notification to the second electronic device, so that the second electronic device can obtain a latest network status of the first electronic device, and then update a network status of the second electronic device.

Optionally, in some embodiments of this application, after determining that the network status changes, the first electronic device sends the network status change notification to the second electronic device.

Optionally, in some embodiments of this application, if the first electronic device already sends an indication to the second electronic device before the first electronic device determines that the network status changes, and the indication indicates that the second electronic device enters a non-sleep phase, the first electronic device may send the network status change notification to the second electronic device after determining that the network status changes.

Optionally, in some embodiments of this application, when the first electronic device restores the data channel unilaterally when the second electronic device is in the non-sleep phase, after the first electronic device determines that the network status changes, if the data channel on the first electronic device is not disabled, the first electronic device sends a network status change notification to the second electronic device.

S1104: Optionally, after receiving the second notification, the first electronic device restores the data channel unilaterally.

If the data channel is disabled after the first electronic device receives the second notification, the first electronic device restores the data channel unilaterally. For content of restoring the data channel unilaterally by the first electronic device, refer to the text descriptions in step S307. Details are not described herein again.

The following describes hardware structures and software architectures of a first electronic device and a second electronic device provided in embodiments of this application.

In the following, an electronic device refers to the first electronic device and the second electronic device.

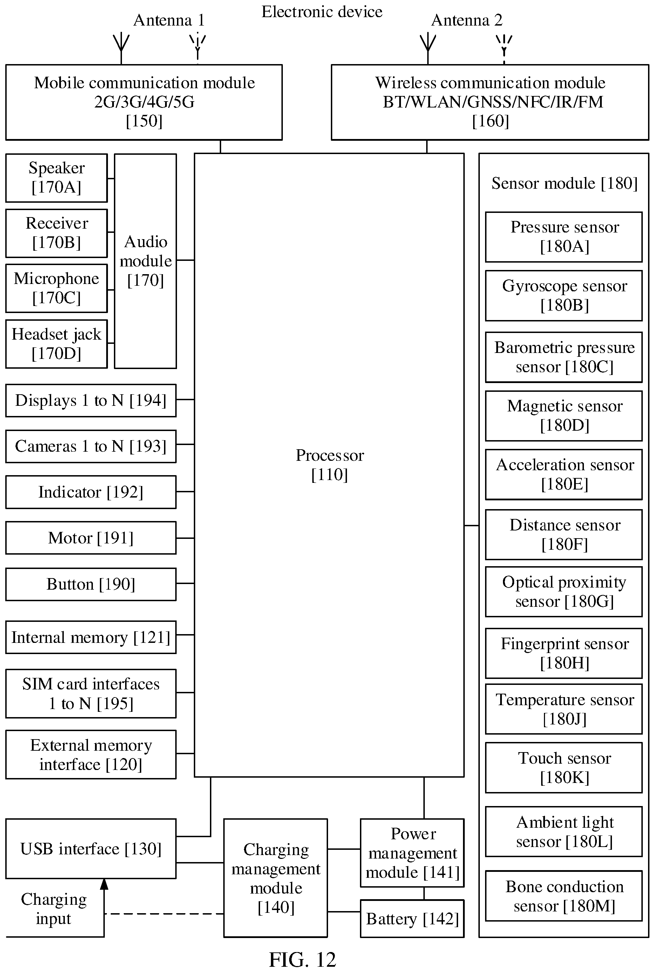

FIG. 12 is a diagram of an example of a hardware structure of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

Optionally, in some embodiments of this application, the first electronic device is an electronic device like a mobile phone, a tablet computer, a desktop computer, a laptop computer, a handheld computer, a notebook computer, an ultra-mobile personal computer, a netbook, a cellular phone, or a personal digital assistant. The second electronic device is a VR device, a wearable device, or a vehicle-mounted device.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device. In some other embodiments of this application, the electronic device may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device. The processor 110 communicates with the display 194 through the DSI, to implement a display function of the electronic device.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device, or may be configured to transmit data between the electronic device and a peripheral device, or may be configured to connect to a headset for playing audio through the headset. The interface may be further configured to connect to another electronic device like an AR device.

It may be understood that an interface connection relationship between the modules that is shown in this embodiment of the present invention is merely an example for description, and does not constitute a limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the electronic device are coupled, and the antenna 2 and the wireless communication module 160 in the electronic device are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform on frequency energy.

The video codec is configured to compress or decompress a digital video. The electronic device may support one or more video codecs. In this way, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device may be implemented through the NPU, for example, image recognition, facial recognition, voice recognition, and text understanding.

The internal memory 121 may be one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like according to storage specifications.

The random access memory may be directly read and written by the processor 110, may be configured to store executable programs (such as machine instructions) of an operating system or another running program, and may also be configured to store data of users and applications.

The non-volatile memory may also store the executable programs, the data of the users and the applications, and the like, and may be loaded into the random access memory in advance, to be directly read and written by the processor 110.

The external memory interface 120 may be configured to connect to an external non-volatile memory, to expand a storage capability of the electronic device. The external non-volatile memory communicates with the processor 110 through the external memory interface 120, to implement a data storage function. For example, files such as music and videos are stored in the external non-volatile memory.

The electronic device may implement an audio function like music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and implement a noise reduction function. In some other embodiments, three, four, or more microphones 170C may alternatively be disposed in the electronic device, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines pressure intensity based on a capacitance change. When a touch operation is performed on the display 194, the electronic device detects intensity of the touch operation through the pressure sensor 180A. The electronic device may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device. In some embodiments, angular velocities of the electronic device around three axes (namely, axes x, y, and z) may be determined through the gyroscope sensor 180B. The gyroscope sensor 180B may be configured to implement image stabilization during photographing. For example, when a shutter is pressed, the gyroscope sensor 180B detects an angle at which the electronic device jitters, calculates, based on the angle, a distance for which a lens module needs to compensate, and allows the lens to cancel the jitter of the terminal device through reverse motion, to implement image stabilization. The gyroscope sensor 180B may also be used in a navigation scenario or a somatic game scenario.

The barometric pressure sensor 180C is configured to measure barometric pressure. In some embodiments, the electronic device calculates an altitude through the barometric pressure measured by the barometric pressure sensor 180C, to assist in positioning and navigation.

The magnetic sensor 180D includes a Hall sensor. The electronic device may detect opening and closing of a flip cover by using the magnetic sensor 180D. In some embodiments, when the electronic device is a flip phone, the electronic device may detect opening and closing of a flip cover by using the magnetic sensor 180D. Further, a feature like automatic unlocking upon opening of the flip cover is set based on a detected opening or closing state of the flip cover.

The acceleration sensor 180E may detect magnitude of acceleration of the electronic device in various directions (usually on three axes). A magnitude and a direction of gravity may be detected when the electronic device is still. The acceleration sensor 180E may be further configured to identify a posture of the electronic device, and is used in switching between a landscape mode and a portrait mode or an application like a pedometer.

The distance sensor 180F is configured to measure a distance. The electronic device may measure the distance through infrared or laser. In some embodiments, in a photographing scenario, the electronic device may measure a distance by using the distance sensor 180F to implement quick focusing.

The optical proximity sensor 180G may include, for example, a light-emitting diode (LED) and an optical detector like a photodiode. The light-emitting diode may be an infrared light-emitting diode. The electronic device emits infrared light by using the light-emitting diode. The electronic device detects infrared reflected light from a nearby object by using the photodiode. When detecting sufficient reflected light, the electronic device may determine that there is an object near the electronic device. When detecting insufficient reflected light, the electronic device may determine that there is no object near the electronic device. The electronic device may detect, by using the optical proximity sensor 180G, that the user holds the electronic device close to an ear for a call, to automatically turn off a screen for power saving. The optical proximity sensor 180G may also be used in a smart cover phase or a pocket phase to automatically perform screen unlocking or locking.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device is in a pocket, to avoid an accidental touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a threshold, the electronic device lowers performance of a processor located near the temperature sensor 180J, to reduce power consumption for thermal protection. In some other embodiments, when the temperature is lower than another threshold, the electronic device heats the battery 142, to avoid abnormal shutdown of the electronic device caused by a low temperature. In some other embodiments, when the temperature is lower than still another threshold, the electronic device boosts an output voltage of the battery 142, to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may also be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device may receive a button input, and generate a button signal input related to user settings and function control of the electronic device.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 simultaneously. The plurality of cards may be of a same type or different types. The SIM card interface 195 may be compatible with different types of SIM cards. The SIM card interface 195 is also compatible with an external memory card. The electronic device interacts with a network by using the SIM card, to implement functions such as calling and data communication. In some embodiments, the electronic device uses an eSIM, that is, an embedded SIM card. The eSIM card may be embedded into the electronic device, and cannot be separated from the electronic device.

Optionally, in some embodiments of this application, the second electronic device may not have the mobile communication module 150.

Optionally, in some embodiments of this application, the second electronic device may determine, via the ambient light sensor 180L, whether the second electronic device is in a sleep state.

Optionally, in some embodiments of this application, the second electronic device may determine, via the optical proximity sensor 180G, whether the second electronic device is in the non-worn state.

Optionally, in some embodiments of this application, the second electronic device and the first electronic device establish a connection through respective wireless communication modules 160.

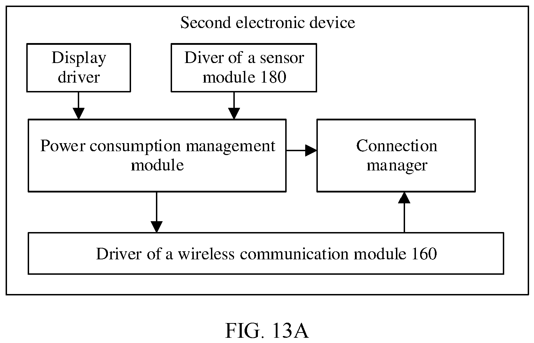

FIG. 13A is a diagram of another example of a software architecture of a second electronic device according to an embodiment of this application.

As shown in FIG. 13A, the software architecture of the second electronic device includes: a display driver, a driver of a sensor module 180, a power consumption management module, and a driver of a wireless communication module 160.

The power consumption management module may receive data reported by the display driver and the driver of the sensor module 180, further determine whether the second electronic device is in a sleep state, a screen-off state, or a non-worn state, and further determine whether the second electronic device is in a sleep phase, a light sleep phase, or a deep sleep phase.

After determining that the second electronic device is in the sleep phase or the deep sleep phase, the power consumption management module may invoke, via the driver of the wireless communication module 160, the wireless communication module 160 to send a first notification to a first electronic device. After determining that the second electronic device is in the non-sleep phase, the power consumption management module may invoke, via the driver of the wireless communication module 160, the wireless communication module 160 to send a second notification to the first electronic device.

After determining that the second electronic device is in the sleep phase or the deep sleep phase, the power consumption management module indicates that the driver of the wireless communication module 160 does not send a network status to a connection manager after receiving a network status change notification. Alternatively, the power consumption management module may indicate the connection manager not to broadcast a latest network status to an application on the second electronic device.

The connection manager is configured to update the network status, including notifying an updated network status of the application on the second electronic device based on a callback registered by the application on the second electronic device.

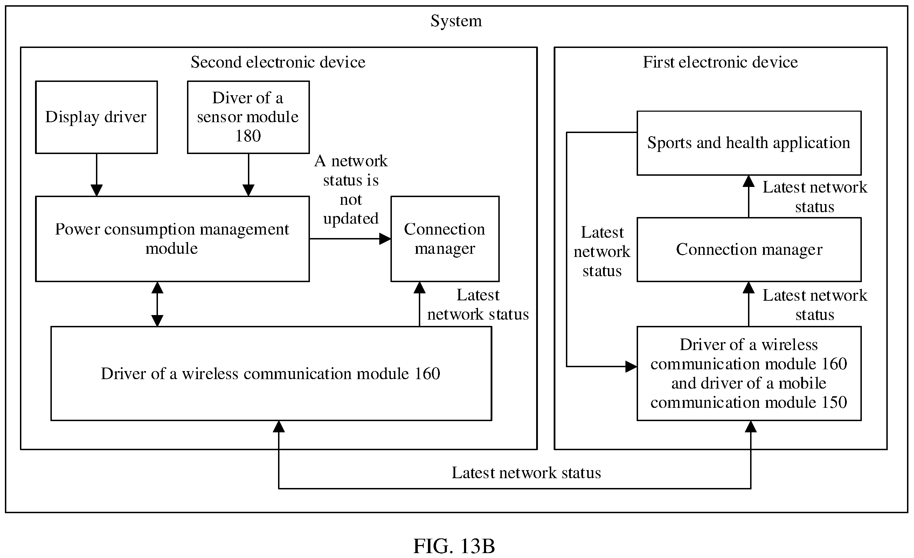

FIG. 13B is a diagram of an example of a software architecture of a system including a second electronic device and a first electronic device according to an embodiment of this application.

As shown in FIG. 13B, the first electronic device establishes a connection to the second electronic device.

A sports and health application on the first electronic device may register a callback with a connection manager of the first electronic device, so that after the connection manager determines a latest network status, the sports and health application on the first electronic device may obtain the latest network status. The latest network status may be determined based on a parameter reported by a driver of a wireless communication module 160 and/or a driver of a mobile communication module 150.

The sports and health application may determine whether the second electronic device is in a sleep phase. A second socket and s third socket may be established by the sports and health application. The sports and health application may alternatively be another application, a service (service), or the like. This is not limited herein.

After determining the latest network status, the sports and health application may send the latest network status to the second electronic device through the wireless communication module 160.

Optionally, in some embodiments of this application, after determining that the second electronic device is in the sleep phase, the sports and health application may not send the latest network status, to avoid waking up the second electronic device and increasing power consumption of the second electronic device. In other words, the sports and health application may be used to receive a first notification and/or a second notification.

After determining that the second electronic device enters a light sleep phase, a power consumption management module on the second electronic device may indicate a connection manager not to update a network status after receiving the latest network status, to avoid increasing the power consumption of the second electronic device, and further avoid increasing the power consumption of the second electronic device caused by that the application determines to perform some operations after the latest network status is received.

The power consumption management module may send the first notification and/or the second notification to the first electronic device through the driver of the wireless communication module 160.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM or a random access memory RAM, a magnetic disk, or an optical disc.

## Claims

1. A system, wherein the system comprises a first electronic device and a second electronic device, the first electronic device is connected to the second electronic device, and the second electronic device accesses a network via the first electronic device, wherein
the second electronic device is configured to send a first notification to the first electronic device before switching from a non-sleep phase to a sleep phase, wherein the first notification indicates that the second electronic device is prohibited from sending a network status change notification;
the first electronic device is configured to: after receiving the first notification, skip sending the network status change notification to the second electronic device after determining that a network status of the first electronic device changes, wherein the network status change notification comprises the network status of the first electronic device;
the second electronic device is configured to send a second notification to the first electronic device after switching from the sleep phase to the non-sleep phase, wherein the second notification indicates that the second electronic device is allowed to send the network status change notification; and
the first electronic device is configured to send the network status change notification to the second electronic device after receiving the second notification.

2. The system according to claim 1, wherein the second electronic device sends data for network access to the second electronic device through a first data channel; and
the second electronic device is further configured to disable the first data channel before switching from the non-sleep phase to the sleep phase.

3. The system according to claim 2, wherein the first electronic device receives and forwards, through a second data channel, the data for network access sent by the second electronic device; and
the first electronic device is further configured to disable the second data channel after receiving the first notification.

4. The system according to any one of claims 1 to 3, wherein the second electronic device is further adapted to configure a network status of the second electronic device as no network or network unavailable before switching from the non-sleep phase to the sleep phase.

5. The system according to any one of claims 1 to 4, wherein
the second electronic device is further configured to: obtain a first parameter, and determine, based on the first parameter, that a state of the second electronic device is a first state; and
the second electronic device is further configured to determine, based on the first state, to switch from the sleep phase to the non-sleep phase or switch from the non-sleep phase to the sleep phase.

6. The system according to claim 5, wherein when the second electronic device determines, based on the first state, to switch from the non-sleep phase to the sleep phase, the first state is a sleep state or a non-worn state.

7. The system according to any one of claims 1 to 6, wherein
the second electronic device is further configured to send, in the non-sleep phase, a network detection request to the first electronic device;
the first electronic device is further configured to determine a network detection result based on the network status of the first electronic device; and
the first electronic device is further configured to send the network detection result to the second electronic device.

8. A method for controlling device power consumption, applied to a second electronic device, wherein a first electronic device is connected to the second electronic device, the second electronic device accesses a network via the first electronic device, and the method comprises:
updating, by the second electronic device after receiving, in a non-sleep phase, a network status change notification sent by the first electronic device, a network status based on the network status change notification, wherein the network status change notification comprises a network status of the first electronic device;
sending, by the second electronic device before determining to enter a sleep phase from the non-sleep phase, a first notification to the first electronic device, wherein the first notification indicates that the first electronic device is prohibited from sending a network status change notification; and
sending, by the second electronic device after determining to enter the non-sleep phase from the sleep phase, a second notification to the first electronic device, wherein the second notification indicates that the first electronic device is allowed to send a network status change notification.

9. The method according to claim 8, wherein the second electronic device sends data for network access to the second electronic device through a first data channel; and
the method further comprises: disabling, by the second electronic device, the first data channel before the second electronic device determines to enter the sleep phase from the non-sleep phase.

10. The method according to claim 9, wherein the disabling, by the second electronic device, the first data channel specifically comprises:
configuring, by the second electronic device, the network status as no network or network unavailable.

11. A method for controlling device power consumption, applied to a second electronic device, wherein a first electronic device is connected to the second electronic device, the second electronic device accesses a network via the first electronic device, and the method comprises:
storing, by the second electronic device after receiving, in a sleep phase, a network status change notification sent by the first electronic device, the network status change notification;
updating, by the second electronic device after entering a non-sleep phase from the sleep phase, a network status based on the network status change notification received in the sleep phase; and
updating, by the second electronic device after receiving, in the non-sleep phase, a network status change notification sent by the first electronic device, the network status based on the network status change notification received in the non-sleep phase.

12. The method according to claim 11, wherein the second electronic device sends data for network access to the second electronic device through a first data channel; and
the method further comprises: disabling, by the second electronic device, the first data channel before the second electronic device determines to enter the sleep phase from the non-sleep phase.

13. The method according to claim 12, wherein the disabling, by the second electronic device, the first data channel specifically comprises:
configuring, by the second electronic device, the network status as no network or network unavailable.

14. A method for controlling device power consumption, applied to a second electronic device, wherein a first electronic device is connected to the second electronic device, the second electronic device accesses a network via the first electronic device, and the method comprises:
storing, by the second electronic device after receiving, in a light sleep phase, a network status change notification sent by the first electronic device, the network status change notification;
updating, by the second electronic device after entering a non-sleep phase from the light sleep phase, a network status based on the network status change notification received in the light sleep phase;
sending, by the second electronic device before determining to enter a deep sleep phase from the non-sleep phase or the light sleep phase, a first notification to the first electronic device, wherein the first notification indicates the first electronic device not to send a network status change notification, or the first notification is used to determine that the first electronic device is in the deep sleep phase; and
sending, by the second electronic device after entering the non-sleep phase from the deep sleep phase, a second notification to the first electronic device, wherein the second notification indicates that the first electronic device is allowed to send a network status change notification, or the second notification is used to determine that the second electronic device is in the non-sleep phase.

15. The method according to claim 14, wherein the second electronic device sends data for network access to the second electronic device through a first data channel; and
the method further comprises: disabling, by the second electronic device, the first data channel before the second electronic device determines to enter the sleep phase from the non-sleep phase.

16. The method according to claim 15, wherein the disabling, by the second electronic device, the first data channel specifically comprises:
configuring, by the second electronic device, the network status as no network or network unavailable.

17. A method for controlling device power consumption, applied to a first electronic device, wherein the first electronic device is connected to a second electronic device, the first electronic device provides a network access capability for the second electronic device, and the method comprises:
after the first electronic device receives a first notification sent by the second electronic device, skipping sending, by the second electronic device after determining that a network status changes, a network status change notification to the first electronic device, wherein the network status change notification comprises a changed network status of the first electronic device; and
after the first electronic device receives a second notification sent by the second electronic device, sending, by the first electronic device, a network status change notification to the first electronic device, wherein the second notification indicates that the first electronic device is allowed to send a network status change notification.

18. The method according to claim 17, wherein the method further comprises:
receiving a network detection request sent by the second electronic device;
determining, by the first electronic device, a network detection result based on the network status of the second electronic device; and
sending, by the first electronic device, the network detection result to the second electronic device.

19. An electronic device, wherein the electronic device comprises one or more processors and a memory, wherein
the memory is coupled to the one or more processors, the memory is configured to store computer program code, the computer program code comprises computer instructions, and the one or more processors invoke the computer instructions, to enable the electronic device to perform the method according to any one of claims 8 to 18.

20. A chip system, wherein the chip system is applied to an electronic device, the chip system comprises one or more processors, and the processor is configured to invoke computer instructions, to enable the electronic device to perform the method according to any one of claims 8 to 18.

21. A computer-readable storage medium, comprising instructions, wherein when the instructions are run on an electronic device, the electronic device is enabled to perform the method according to any one of claims 8 to 18.

22. A computer program product comprising instructions, wherein when the computer program product runs on an electronic device, the electronic device is enabled to perform the method according to any one of claims 8 to 18.
